(19) Europäisches Patentamt
European Patent Office
Office européen des brevets

(11) Veröffentlichungsnummer: **0 247 516 B1**

(12) # EUROPÄISCHE PATENTSCHRIFT

(45) Veröffentlichungstag der Patentschrift: **11.09.91**

(51) Int. Cl.$^5$: **C08L 77/00**, C08L 81/06

(21) Anmeldenummer: **87107389.6**

(22) Anmeldetag: **21.05.87**

(54) **Thermoplastische Formmassen.**

(30) Priorität: **24.05.86 DE 3617501**

(43) Veröffentlichungstag der Anmeldung:
**02.12.87 Patentblatt 87/49**

(45) Bekanntmachung des Hinweises auf die Patenterteilung:
**11.09.91 Patentblatt 91/37**

(84) Benannte Vertragsstaaten:
**BE DE FR GB NL**

(56) Entgegenhaltungen:
**EP-A- 0 090 404**
**DE-A- 2 122 735**
**US-A- 3 655 822**

(73) Patentinhaber: **BASF Aktiengesellschaft**
**Carl-Bosch-Strasse 38**
**W-6700 Ludwigshafen(DE)**

(72) Erfinder: **Lausberg, Dietrich, Dr.**
**Nachtigalstrasse 32a**
**W-6700 Ludwigshafen(DE)**
Erfinder: **Blinne, Gerd, Dr.**
**Im Woogtal 7**
**W-6719 Bobenheim(DE)**
Erfinder: **Ittemann, Peter, Dr.**
**Wilhelm-Busch-Strasse 87**
**W-6700 Ludwigshafen(DE)**
Erfinder: **Heinz, Gerhard, Dr.**
**Im Vogelsang 2**
**W-6719 Weisenheim(DE)**
Erfinder: **Seiler, Erhard, Dr.**
**Erpolzheimer Strasse 1**
**W-6700 Ludwigshafen(DE)**
Erfinder: **Knoll, Manfred,**
**Pfrimmstrasse 1**
**W-6521 Wachenheim(DE)**

**EP 0 247 516 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Formmassen, enthaltend als wesentliche Komponenten,

A) 2 bis 97,9 Gew.% eines Polyamids

B) 2 bis 97,9 Gew.% eines Polyarylethersulfons

C) 0,1 bis 30 Gew. % eines Polykondensats aus aliphatischen oder aromatischen Diolen oder höher wertigen Alkoholen mit Epihalogenhydrinen

sowie darüber hinaus

D) 0 bis 50 Gew.% eines schlagzäh modifizierenden Kautschuks und

E) 0 bis 60 Gew.% verstärkende Füllstoffe.

Weiterhin betrifft die Erfindung die Verwendung derartiger Formmassen zur Herstellung von Formkörpern und die aus den Formmassen erhältlichen Formkörper.

Aus der DE-A-21 22 735 sind thermoplastische Formmassen aus Polyamiden und Polyarylethersulfonen bekannt. Insgesamt befriedigen jedoch die mechanischen Eigenschaften dieser Massen noch nicht. Insbesondere läßt die Anfälligkeit gegenüber Spannungsrißkorrosion zu wünschen übrig.

Entsprechend der US-PS 3 655 822 werden Polyarylethersulfone mit Polycaprolactamblöcken in der Hauptkette modifiziert. Eine solche Modifizierung ist jedoch technisch sehr aufwendig, da bei der alkalischen Polymerisation von Caprolactam strenge Anforderungen hinsichtlich des Wassergehalts der Ausgangsverbindungen gestellt werden.

Es war deshalb die technische Aufgabe gestellt, thermoplastische Formmassen aus Polyamiden und Polyarylethersulfonen zur Verfügung zu stellen, die sich durch gute mechanische Eigenschaften, insbesondere schlagzähigkeit, Biegefestigkeit, Reißfestigkeit und Elastizitätsmodul auszeichnen und darüber hinaus eine gute Lösungsmittelbeständigkeit und geringe Anfälligkeit gegenüber Spannungsrißkorrosion aufweisen.

Diese Aufgabe wird erfindungsgemäß durch die eingangs definierten thermoplastischen Formmassen gelöst.

Bevorzugte Massen dieser Art sind den Unteransprüchen zu entnehmen.

Als Komponente A) enthalten die erfindungsgemäßen thermoplastischen Formmassen ein Polyamid oder Mischungen aus mehreren Polyamiden. Geeignet sind grundsätzlich teilkristalline und amorphe Polyamide, es werden jedoch teilkristalline Polyamide bevorzugt, da die daraus hergestellten Formmassen in der Regel solchen aus amorphen Polyamiden hinsichtlich der Wärmeform- und Spannungsrißbeständigkeit überlegen sind. Erfindungsgemäß einsetzbare Polyamide sind an sich bekannt und umfassen z.B. Polyamide mit Molekulargewichten von 5000 oder mehr, wie sie z.B. in den amerikanischen Patentschriften 2 071 250, 2 071 251, 2 130 523, 2 130 948, 2 241 322, 2 312 966, 2 512 906 und 3 393 210 beschrieben sind.

Die Polyamide können z.B. durch Kondensation äquimolarer Mengen einer gesättigten Dicarbonsäure mit 4 bis 12 Kohlenstoffatomen, mit einem Diamin, welches 4 bis 14 Kohlenstoffatome aufweist, hergestellt werden, oder durch Kondensation von Ω-Aminocarbonsäuren oder durch Polyaddition von Lactamen. Beispiele für Polyamide sind Polyhexamethylenadipinsäureamid (Nylon 66), Polyhexamethylenazelainsäureamid (Nylon 691), Polyhexamethylensebacinsäureamid (Nylon 610), Polyhexamethylendodecandisäureamid (Nylon 6121), die durch Ringöffnung von Lactamen erhaltenen Polyamide, wie Polycaprolactam, Polylaurinsäurelactam, ferner Polyamide auf der Basis von Poly-11-aminoundecansäure, Di-(p-aminocyclohexyl)-methan und Dodecandisäure. Es ist auch möglich, gemäß der Erfindung Polyamide zu verwenden, die durch Copolykondensation von zwei oder mehr der oben genannten Polymeren oder ihrer Komponenten hergestellt worden sind, z.B. ein Copolymeres aus Adipinsäure, Isophthalsäure und Hexamethylendiamin. Vorzugsweise sind die Polyamide linear und haben Schmelzpunkte von mehr als 200 °C.

Bevorzugte Polyamide sind Polyhexamethylenadipinsäureamid, Polyhexamethylensebacinsäureamid und Polycaprolactam. Die Polyamide weisen im allgemeinen eine relative Viskosität von 2,5 bis 5 auf, bestimmt an einer 1 gew.%igen Lösung in $H_2SO_4$ bei 23 °C, was einem Molekulargewicht (Gewichtsmittelwert) von etwa 15000 bis 45000 entspricht. Selbstverständlich können auch Mischungen von Polyamiden eingesetzt werden. Der Anteil des Polyamids A von Polyamiden eingesetzt werden. Der Anteil des Polyamids A an den erfindungsgemäßen Formmassen beträgt mindestens 2 Gew.%, bezogen auf das Gesamtgewicht. Formmassen mit einem Gehalt von 10 bis 78, insbesondere 20 bis 67 Gew.% an Polyamid werden besonders bevorzugt.

Als Komponente B enthalten die erfindungsgemäßen Formmassen ein Polyarylethersulfon oder eine Mischung mehrerer Polyarylethersulfone. Unter Polyarylethersulfon sind hierbei Homo- und Copolykondensate zu verstehen, die an aromatische Reste gebundene Sulfongruppen in der Hauptkette enthalten und deren sich wiederholende Einheiten über Etherbrücken verknüpft sind.

Bevorzugt werden Polyarylethersulfone der allgemeinen Formel I eingesetzt

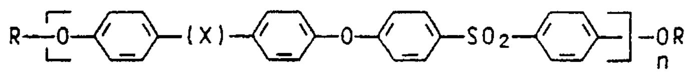 (I)

wobei X = C $(CH_3)2$- oder $-SO_2-$, n eine ganze Zahl von 30 bis 100, vorzugsweise von 40 bis 80 darstellt. Es haben sich jedoch auch aromatische Polysulfone bewährt, die zu mindestens 50 Gew. %, bezogen auf das Gesamtgewicht der aromatischen Polysulfone, aus Einheiten der Formel I bestehen und zusätzlich noch kondensierte Einheiten von Comonomeren enthalten. Bevorzugte Comonomere sind solche, die kondensierte Einheiten mit Strukturen der Formel II

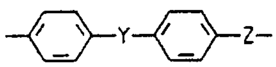 (II)

in der
Y  -O-, -S- , -S-S-, -CO-, $-CH_2-$, $-CH_2-CH_2-$,

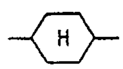 ,

eine $-C(CH_3)_2$-Gruppe oder eine chemische Bindung und
Z  -O- oder $-SO_2$-Gruppe darstellen,
ergeben.

Die Phenylreste in den allgemeinen Formeln I und II wie auch in den nachstehend aufgeführten Formeln III bis V können auch mit $C_1$-$C_6$-Alkyl- oder Alkoxygruppen substituiert sein. Bevorzugt werden jedoch die unsubstituierten Derivate.

Das Polyarylethersulfon kann auch Einheiten der allgemeinen Formeln

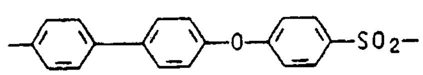 (III)

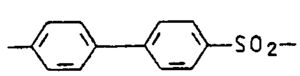 und 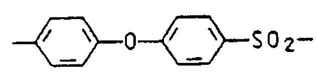 (IV) und

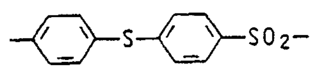 (V)

in der Hauptkette aufweisen, wobei diese in unterschiedlichen Mengenanteilen enthalten sein können.

Die Endgruppen R in der Formel I können Wasserstoff oder Alkylgruppen mit 1 bis 6 C-Atomen, insbesondere Methyl oder Ethyl sein. Die Art der Endgruppen ist abhängig von der Herstellungsweise. Derartige Polyarylethersulfone und Verfahren zu deren Herstellung sind an sich bekannt. Sie können z.B. durch Umsetzung von Alkalimetalldoppelsalzen von zweiwertigen mono- oder dinuklearen Phenolen mit einer aquimolaren Menge 4,4' -Dichlordiphenylsulfon, wie dies in der GB-PS 1 016 245, 1 060 546, 1 109 842, 1 122 192, 1 133 561 und der DE-PS 1 938 806 beschrieben wird, erhalten werden.

Derartige aromatische Polyarylethersulfone weisen im allgemeinen Molekulargewichte von 15.000 bis 50.000, vorzugsweise von 20.000 bis 40.000 und relative Viskositäten (gemessen bei 20° ( in 1 gew.%iger N-Methylpyrrolidon-Lösung) von 0,35 bis 0,85. vorzugsweise von 0,40 bis 0,70 auf.

Der Gehalt der erfindungsgemäßen Formmassen an der Komponente 8 beträgt wie der der Komponente A mindestens 2 Gew.%; Gehalte von 20 bis 88, insbesondere 30 bis 75 Gew.% B, bezogen auf das Gesamtgewicht der Komponenten A) bis E) werden bevorzugt.

Als wesentliche Komponente C enthalten die erfindungsgemäßen Formmassen Polykondensate aus aliphatischen oder aromatischen Diolen oder höherwertiger Alkohole mit Epihalogenhydrinen. Derartige Verbindungen und Verfahren zu ihrer Herstellung sind dem Fachmann an sich bekannt, weshalb sich hier nähere Angaben erübrigen. Grundsätzlich sind aliphatische oder aromatische Diole geeignet. Besonders

bevorzugte Dihydroxiverbindungen sind die für die. Herstellung von Polycarbonaten eingesetzten Diole.

Wegen der leichten Zugänglichkeit wird ein Polykondensat aus Bisphenol A und Epichlorhydrin mit der Struktur

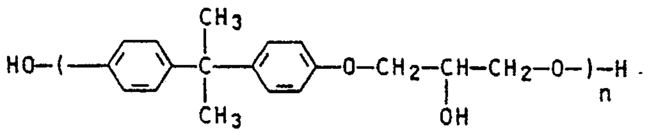

bevorzugt verwendet.

Der Anteil der Komponente C an den erfindungsgemäßen Formmassen liegt im Bereich von 0,1 bis 30 Gew.%, bezogen auf das Gesamtgewicht der Komponenten A) bis C) und hängt von der Verträglichkeit des Basispolymeren der Komponente C) mit den Komponenten A) und B) ab. Im allgemeinen haben sich Anteile von 1 bis 25, insbesondere von 3 bis 20 Gew.% als besonders vorteilhaft herausgestellt.

Neben den Komponenten A) bis C) können die erfindungsgemäßen Formmassen als Komponente D zur Verbesserung der Schlagzähigkeit schlagzäh modifizierende Kautschuke enthalten. Schlagzähigkeitsverbessernde Elastomere (Kautschuke) für Polyamide sind dem Fachmann an sich bekannt.

Nur beispielsweise seien Kautschuke auf Ethylen-, Propylen-, Butadien- oder Acrylatbasis oder Mischungen dieser Monomeren genannt.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-kautschuke zu nennen, die vorzugsweise ein Verhältnis von Ethylenresten zu Propylenresten im Bereich von 40:60 bis 65:35 aufweisen.

Die Mooney-Viskositäten (MLI + 4/100 °C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie 1,4-Butadien, 1,4-Hexadien, 1,5-Hexadien, 2,5-Dimethyl-1,5-hexadien und 1,4-Octadien, cyclische Diene wie Cyclopentadien, Cyclohexadien, Cyclooctadien und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden 1,5-Hexadien, 5-Ethyliden-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM- bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt. Beispielhaft seien Ethylen/Acrylsäure/Acrylester-Terpolymere bzw. entsprechende Copolymere mit Methacrylsäure bzw. deren Estern genannt.

Eine weitere Gruppe bevorzugter Kautschuke sind Copolymere des Ethylens mit Acrylsäure- und/oder Methacrylsäureestern, insbesondere solche die zusätzlich noch Epoxy-Gruppen enthalten.

Diese Epoxygruppen werden vorzugsweise durch Zugabe von Epoxygruppen enthaltenden Monomeren der allgemeinen Formeln II oder III zum Monomerengemisch in den Kautschuk eingebaut

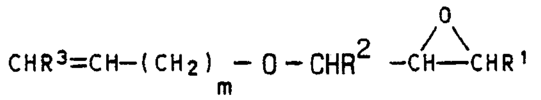 (II)

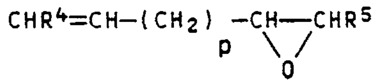 (III)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20 und p eine ganze Zahl von 0 bis 5 ist.

Bevorzugt sind $R^1$, $R^2$ und $R^3$ Wasserstoff und m hat den Wert 0 oder 1. Die entsprechenden Verbindungen sind Allylglycidylether oder Vinylglycidylether.

Bevorzugte Beispiele für Verbindungen zum Einbau von Epoxygruppen sind weiterhin Epoxygruppen-enthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

| | | |
|---|---|---|
| 50 bis 98, | insbesondere 60 bis 95 Gew.% | Ethylen, |
| 1 bis 40, | insbesondere 2 bis 20 Gew.% | Glycidylacrylat und/oder Glycidylmethacrylat, |
| 1 bis 45, | insbesondere 10 bis 35 Gew.% | n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C vund 2,16 kg Belastung).

Bevorzugte Elastomere (Kautschuke) D) sind weiterhin Pfropfcopolymerisate mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk D) können auch Pfropfpolymerisate aus

| | |
|---|---|
| 25 bis 98 Gew.% | eines Acrylatkautschuks mit einer Glasübergangstemperatur von unter -20 °C als Pfropfgrundlage |

und

| | |
|---|---|
| 2 bis 75 Gew.% | eines copolymerisierbaren ethylenisch ungesättigten Monomeren, dessen Homo- bzw. Copolymerisate eine Übergangstemperatur von mehr als 25 °C aufweisen, als Pfropfauflage |

eingesetzt werden.

Die Pfropfgrundlage sind Acrylat-bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird

durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°) nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C weisen vorzugsweise eine Glasübergangstemperatur von unter -30° C, insbesondere von unter -40° C auf, was zu einer guten Schlagzähigkeit auch bei tiefen Temperaturen führt.

Es versteht sich, daß auch Mischungen der vorstehend aufgeführten Kautschuktypen eingesetzt werden können.

Als verstärkend wirkende Füllstoffe E) seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 200 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen.

Andere geeignete Füllstoffe sind z.B. Wollastonit, Calciumcarbonat, Glaskugeln, Quarzmehl, Si- und Bornitrid oder Mischungen dieser Füllstoffe.

Von den vorstehend genannten verstärkenden Füllstoffen haben sich insbesondere Glasfasern als vorteilhaft herausgestellt, besonders dann, wenn eine sehr hohe Wärmeformbeständigkeit gefordert ist.

Der Anteil der Komponente E) beträgt 0 bis 60, vorzugsweise 2 bis 50 und insbesondere 5 bis 30 Gew.%, bezogen auf das Gesamtgewicht der Formmassen.

Bevorzugte Glasfasern und schlagzäh modifizierenden Kautschuk enthaltende Formmassen haben folgende Zusammensetzungen

Komponente A (Polyamid):

10 bis 76, insbesondere 20 bis 57 Gew.%

Komponente B (Polyarylethersulfon):

20 bis 86, insbesondere 30 bis 67 Gew.%

Komponente C (Polymeres mit OH-Gruppen):

1 bis 25, insbesondere 3 bis 20 Gew.%

Komponente D (Kautschuk):

1 bis 25, vorzugsweise 5 bis 20 Gew.%

Komponente E (Glasfasern und/oder mineral. Füllstoffe):

2 bis 50, insbesondere 5 bis 30 Gew.%.

Neben den Komponenten A) bis E) können die erfindungsgemäßen Formmassen übliche Zusatzstoffe und Verarbeitungshilfsmittel enthalten. Deren Anteil beträgt im allgemeinen bis zu 60, vorzugsweise bis zu

50 Gew.%, bezogen auf das Gesamtgewicht der Komponenten A) bis E).

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, Keimbildungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems. z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit- und Entformungsmittel, die in der Regel in Mengen bis zu 1 Gew.% der thermoplastischen Masse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente. z.B. Titandioxid, Cadmiumsulfid, Cadmiumsulfidselenid, Phthalocyanine, Ultramarinblau oder Ruß zugesetzt werden. Keimbildungsmittel, wie Talkum, Calciumfluorid, Natriumphenylphosphinat, Aluminiumoxid oder feinteiliges Polytetrafluorethylen können in Mengen z.B. bis zu 5 Gew.%, bezogen auf die Komponenten A) bis E) angewandt werden.

Die Herstellung der erfindungsgemäßen Formmassen kann nach an sich bekannten Mischverfahren z.B. durch Einarbeiten des Polyarylethersulfons in das Polyamid bei Temperaturen oberhalb des Schmelzpunkts des Polyarylethersulfons erfolgen, insbesondere bei Temperaturen von 250 bis 350 °C, besonders bei 280 bis 320 °C, in üblichen Mischvorrichtungen, wie Extrudern, Knetern und Mischern. Die Komponenten D und E, die gegebenenfalls enthalten sind, werden entsprechend zugegeben.

Aus den erfindungsgemäßen Formmassen lassen sich leicht Formkörper mit guter Oberflächenbeschaffenheit und verbesserter Schlagzähigkeit bei hoher Steifigkeit, insbesondere bei tiefen Temperaturen, herstellen. Weder im Formörper noch in der Schmelze tritt eine Entmischung der Polymerkomponenten ein.

Beispiele

Zur Herstellung von erfindungsgemäßen thermoplastischen Formmassen wurden folgende Ausgangsstoffe eingesetzt.

Komponente A (Polyamide):

- A 1: Polyhexamethylenadipinamid mit einer relativen Viskosität von 3,31, gemessen an einer 1 %igen Lösung in 96 % $H_2SO_4$ bei 25 °C
- A 2: Polycaprolactam mit einer relativen Viskosität von 4,0 (gemessen wie bei A 1)
- A 3: Polyhexamethylensebacinsäureamid mit einer relativen Viskosität von 3,23 (gemessen wie bei A 1)
- A 4: Polyamid, hergestellt aus Hexamethylendiamin und einem Gemisch aus Isophthalsäure und Terephthalsäure (Gew.-Verh. 60/40) mit einer relativen Viskosität von 1,91 gemessen an einer 1 gew.%igen Lösung in konzentrierter Schwefelsäure bei 25 °C.

Komponente B

B 1: Polyarylethersulfon der Struktur

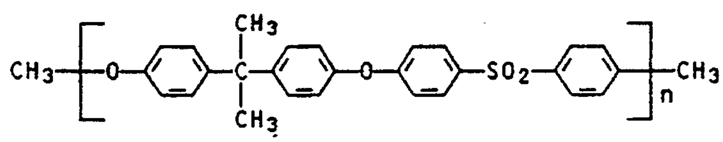

mit einer relativen Viskosität $\eta_{rel}$ = 0,6 gemessen in 1 gew.%iger Lösung in N-Methylpyrrolidon bei 25 °C.

B 2: Polyarylethersulfon der Struktur

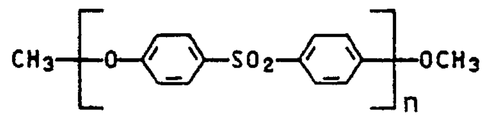

mit einer relativen Viskosität $\eta_{rel}$ = 0,55 (gemessen wie bei B 1).

Komponente C:

C: Polykondensat aus 2,2-Di-(4-Hydroxyphenyl)propan und Epichlorhydrin (PHenoxy™, Union Carbide) mit einer relativen Viskosität von 1,13, gemessen in 0,5 gew.%iger Lösung in Dichlormethan bei 25° C. Struktur:

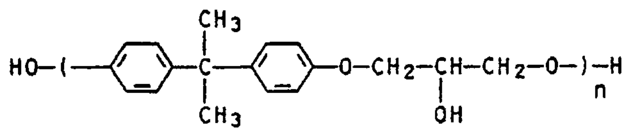

Komponente D:

Zur Verbesserung der Schlagzähigkeit wurden folgende Kautschuke eingesetzt:

D 1: Pfropfkautschuk mit einer Pfropfgrundlage (75 Gew.%) aus Polyn-Butylacrylat, das mit Butandioldiacrylat umgesetzt wurde und eine Pfropfhülle (25 Gew.%) eines Copolymeren aus Styrol und Acrylnitril (Gew.-Verh. 75:25) hergestellt durch Emulsionspolymerisation in an sich bekannter Weise. (Mittlere Teilchengröße $d_{50}$ = 2500 nm)

D 2: Pfropfkautschuk mit einer Pfropfgrundlage aus Polybutadien (75 %) und einer Pforpfhülle (25 %) eines Copolymeren aus Styrol und Acrylnitril (Gew.-Verh. 75:25) hergestellt durch Emulsionspolymerisation in an sich bekannter Weise. ($d_{50}$ = 250 nm)

D 3: Terpolymeres aus Ethylen, n-Butylacrylat und Acrylsäure (Gew.-Verh. 65/30/5) hergestellt durch Hochdruckpolymerisation in bekannter Weise. (MFI = (Schmelzindex) 10 g/10 min (190° C, 2,16 kg)

Der mittlere Teilchendurchmesser $d_{50}$ ist der Durchmesser, ober- und unterhalb dessen die Durchmesser von jeweils 50 Gew.% der Teilchen liegen.

Die Formmassen wurden hergestellt indem die Komponenten intensiv gemischt, in einem Zweischnekkenextruder bei 300° C aufgeschmolzen, homogenisiert und in ein Wasserbad extrudiert wurden. Nach Granulierung und Trocknung wurde die Mischung auf einer Spritzgußmaschine zu Prüfkörpern geformt und diese ohne weitere Nachbehandlung untersucht.

Die Lochkerbschlagzähigkeit wurde nach DIN 53753 bestimmt. Die Ergebnisse sind in Tabelle 1 und 2 mit der Zusammensetzung der einzelnen Formmassen aufgeführt (alle %-Angaben beziehen sich auf das Gewicht).

Dabei zeigt Tabelle 2, daß durch Kautschukmodifikation die Zähigkeit der Formmassen nochmals beträchtlich angehoben werden kann, insbesondere bei tiefen Temperaturen.

Tabelle 1 (alle Angaben in Gew.%)

| Beispiel | Komponente B % | B Typ | A % | A Typ | C % | Lochkerbschlagzähigkeit ($kJ/m^2$) nach DIN 53 753 23°C | -20°C | -40°C |
|---|---|---|---|---|---|---|---|---|
| 1 | 50 | B1 | 50 | A2 | - | 7 | 7 | 7 |
| 2 | 50 | B1 | 50 | A1 | - | 4 | 4 | 4 |
| 3 | 50 | B1 | 50 | A3 | - | 10 | 10 | 10 |
| 4 | 50 | B2 | 50 | A2 | - | 16 | 14 | 14 |
| 5 | 50 | B2 | 50 | A3 | - | 16 | 12 | 11 |
| 6 | 45 | B1 | 45 | A2 | 10 | 102 | 45 | 35 |
| 7 | 45 | B1 | 45 | A1 | 10 | 85 | 40 | 32 |
| 8 | 45 | B1 | 45 | A3 | 10 | 80 | 50 | 45 |
| 9 | 45 | B2 | 45 | A2 | 10 | 35 | 30 | 25 |
| 10 | 45 | B2 | 45 | A3 | 10 | 40 | 30 | 25 |
| 11 | 70 | B1 | 25 | A2 | 5 | 91 | 56 | 43 |
| 12 | 70 | B2 | 25 | A3 | 5 | 75 | 46 | 38 |
| 13 | 30 | B1 | 63 | A1 | 7 | 76 | 39 | 26 |
| 14 | 45 | B1 | 45 | A4 | 10 | 53 | 46 | 42 |

Tabelle 2 (alle Angaben in Gew.%)

| Beispiel | Komponente B % | Komponente B Typ | Komponente A % | Komponente A Typ | Komponente C % | Komponente D % | Komponente D Typ | Lochkerbschlagzähigkeit ($kJ/m^2$) nach DIN 53 753 23°C | -20°C | -40°C |
|---|---|---|---|---|---|---|---|---|---|---|
| 15 | 45 | B1 | 45 | A3 | 5 | 5 | D3 | 96 | 91 | 74 |
| 16 | 45 | B1 | 45 | A2 | 5 | 5 | D2 | 98 | 90 | 83 |
| 17 | 40 | B1 | 40 | A3 | 5 | 15 | D3 | 110 | 108 | 108 |
| 18 | 40 | B1 | 40 | A3 | 5 | 15 | D1 | 106 | 84 | 73 |
| 19 | 45 | B2 | 25 | A2 | 5 | 5 | D3 | 89 | 76 | 72 |
| 20 | 25 | B2 | 45 | A3 | 5 | 5 | D3 | 110 | 90 | 78 |
| 21 | 25 | B2 | 45 | A1 | 5 | 5 | D3 | 85 | 64 | 53 |
| 22 | 45 | B2 | 45 | A3 | 5 | 5 | D2 | 109 | 93 | 86 |

## Patentansprüche

**1.** Thermoplastische Formmassen, enthaltend als wesentliche Komponenten
A) 2 bis 97,9 Gew.% eines Polyamids

B 2 bis 97,9 Gew.% eines Polyarylethersulfons

C) 0,1 bis 30 Gew.% eines Polykondensats aus aliphatischen oder aromatischen Diolen oder höherwertigen Alkoholen mit Epihelogenhydrinen

sowie darüber hinaus

D) 0 bis 50 Gew.% eines schlagzäh modifizierenden Kautschuks und

E) 0 bis 60 Gew.% verstärkende Füllstoffe, wobei sich die Angaben in Gew.% auf das Gesamtgewicht der Komponenten A) bis B) beziehen.

2. Thermoplastische Formmassen nach Anspruch 1, enthaltend als Komponente C) ein Polykondensat aus Epichlorhydrin und Bisphenol A (2,2-Di-(4-hydroxyphenyl)propan).

3. Thermoplastische Formmassen nach Anspruch 1 oder 2, dadurch gekennzeichnet, daß der Gehalt an

E) verstärkenden Füllstoffen 2 bis 50 Gew.%

beträgt.

4. Verwendung der thermoplastischen Formmassen gemäß den Ansprüchen 1 bis 3 zur Herstellung von Formkörpern.

5. Formkörper, erhältlich aus Formmassen gemäß den Ansprüchen 1 bis 3.

## Claims

1. A thermoplastic molding material containing, as essential components,
   A) from 2 to 97.9% by weight of a nylon,
   B) from 2 to 97.9% by weight of a polyaryl ether sulfone
   C) from 0.1 to 30% by weight of a polycondensate of aliphatic or aromatic diols or polyhydric alcohols with epihalohydrins
   
   and in addition
   D) from 0 to 50% by weight of a rubber impact modifier and
   E) from 0 to 60% by weight of reinforcing fillers, the figures in % by weight being based on the total weight of components A) and B)

2. A thermoplastic molding material as claimed in claim 1, containing, as component C), a polycondensate of epichlorohydrin and bisphenol A (2,2-di-(4-hydroxyphenyl)propane).

3. A thermoplastic molding material as claim in claim 1 or 2, wherein the content of
   E) reinforcing fillers is from 2 to 50% by weight.

4. Use of a thermoplastic molding material as claimed in any of claims 1 to 3 for the production of moldings.

5. A molding obtainable from a molding material as claimed in any of claims 1 to 3.

## Revendications

1. Matières à mouler thermoplastiques, contenant comme composants essentiels
   A) de 2 à 97,9% en poids d'un polyamide,
   B) de 2 à 97,9)% en poids d'une polyaryléthersulfone,
   C) de 0,1 à 30% en poids d'un produit de polycondensation de diols ou de polyols aliphatiques ou aromatiques avec des épihalogénhydrines,
   
   et, en outre,
   D) de 0 à 50% en poids d'un caoutchouc modifié à résistance élevée aux chocs et
   E) de 0 à 60% en poids de charges de renforcement, les valeurs en % en poids se rapportant au poids total des composants A) à E).

2. Matières à mouler thermoplastiques selon la revendication 1, contenant comme composant C) un produit de polycondensation d'épichlorhydrine et de bisphénol A [2,2-di- (4-hydroxyphényl)-propane].

3. Matières à mouler thermoplastiques selon la revendication 1 ou 2, caractérisées en ce que leur teneur en charges de renforcement E) est comprise entre 2 et 50% en poids.

4. Utilisation des matières à mouler thermoplastiques selon l'une quelconque des revendications 1 à 3 pour la fabrication de corps moulés.

5. Corps moulés, obtenus à partir de matières à mouler selon l'une quelconque des revendications 1 à 3.